# EUROPÄISCHE PATENTSCHRIFT

(11) **EP 2 334 146 B1**
(45) Veröffentlichungstag und Bekanntmachung des Hinweises auf die Patenterteilung: **05.06.2019**
(21) Anmeldenummer: 11159421.4
(22) Anmeldetag: 12.04.2007
(51) Int. Cl.: H05B 33/08

(54) **BETRIEBSSCHALTUNG fÜR LEUCHTDIODEN**
OPERATING CIRCUIT FOR LIGHT-EMITTING DIODES
CIRCUIT DE COMMANDE POUR DIODES ÉLECTROLUMINESCENTES

(30) Priorität: 21.04.2006 DE 102006018578; 25.07.2006 DE 102006034371
(43) Veröffentlichungstag der Anmeldung: 15.06.2011
(62) Teilanmeldung aus: 07724201.4
(73) Patentinhaber: Tridonic AG, 8755 Ennenda (CH)
(72) Erfinder: Zimmermann, Michael, 8888 Heiligkreuz (CH)
(74) Vertreter: Rupp, Christian

(56) Entgegenhaltungen:
- EP-A1- 1 278 401
- EP-A2- 1 033 903
- WO-A-96/02970
- US-A- 6 057 651
- US-A1- 2005 218 838

## Beschreibung

Die vorliegende Erfindung bezieht sich auf ein Verfahren und eine Schaltung zum Betrieb von Leuchtdioden mittels Schaltreglern zur Bereitstellung der Betriebsspannung für die LEDs.

Die Druckschrift EP 1 033 903 A2 offenbart ein Beleuchtungsverfahren zum Ausführen durch ein elektronisches Gerät, wobei das Gerät eine Beleuchtungselektronik umfasst, wobei das Verfahren umfasst: 1) Initiieren des Ladens von magnetischer Energie in elektromagnetische Umwandlungsmittel und Aufrechterhalten des Ladens; 2) Beenden des Ladens, wenn die Menge an geladener Energie einen spezifizierten Schwellenwert erreicht; 3) Zulassen, dass zumindest ein Teil der geladenen Energie in eine Beleuchtungseinrichtung mit einer LED zum Erzeugen von Lichtenergie als Reaktion auf die Beendigung des Ladens entladen wird; 4) Empfangen eines Signal unabhängig von dem Betrieb der Beleuchtungselektronik zur Steuerung der Beleuchtung; und 5) Zurückkehren zu Schritt 1) in Reaktion auf das Signal.

Die Druckschrift US 2005/0218838 A1 offenbart ein Netzwerk, umfassend: eine verteilte Gleichspannung, um dem Netzwerk eine Energiequelle bereitzustellen; mindestens eine erste und eine zweite Vorrichtung, die mit der verteilten Gleichspannung gekoppelt sind, wobei jede der ersten und zweiten Vorrichtungen umfasst: mindestens eine erste LED, die konfiguriert ist, um eine erste Strahlung mit einem ersten Spektrum zu erzeugen; und einen ersten Feed-Forward-Treiber, der mit der wenigstens einen ersten LED gekoppelt ist und konfiguriert ist, um eine erste Intensität der ersten Strahlung zu steuern, ohne eine(n) der wenigstens einen ersten LED bereitgestellte(n) erste Spannung oder ersten Strom zu überwachen oder zu regulieren;
und mindestens eine Netzwerksteuereinheit, die mit der ersten und der zweiten Vorrichtung gekoppelt ist, um mindestens ein Strahlungssteuersignal zu erzeugen, das Informationen enthält, die die erste Intensität der von der ersten und der zweiten Vorrichtung erzeugten ersten Strahlung repräsentieren.

Es ist grundsätzlich bekannt, Schaltregler, insbesondere Tiefsetzsteller (Buck Converter) zur Ansteuerung von Leuchtdioden zu verwenden. Dabei steuert eine Steuereinheit einen getakteten Halbleiter-Leistungsschalter an, mittels dem in dessem eingeschalteten Zustand eine Induktivität energetisiert wird, wobei sich die Energie der Induktivität im ausgeschalteten Zustand des Schalters dann über die Leuchtdiodenstrecke entlädt.

Es kommt somit durch die Leuchtdioden zu einem zickzackförmigen Stromverlauf um einen konstanten Mittelwert herum, wobei sich im eingeschalteten Zustand des Schalters jeweils eine ansteigende Flanke und im ausgeschalteten Zustand des Schalters eine abfallende Flanke des Leuchtdiodenstroms ergibt.

Somit kann der zeitliche Mittelwert des Leuchtdiodenstroms durch entsprechende Taktung des Leistungsschalters eingestellt werden. Zur Regelung des Mittelwerts des Leuchtdiodenstroms muss dementsprechend der Strom durch die Leuchtdioden auch erfasst werden. Dabei besteht das Problem, dass sich bei Erfassung des Leuchtdiodenstroms mittels eines Messwiderstands (Shunt) an der potentialniedrigeren Seite der Leuchtdiodenstrecke ein Signal abgegriffen und ausgewertet werden muss, das auf einem relativ hohen Potential von beispielsweise nahe von 40 Volt liegen kann. Dies allein verhindert bereits, dass die gesamte Steuereinheit einschließlich der Leuchtdiodenstromerfassung vollständig integriert werden kann.

Schliesslich wird oft gefordert, für LED-Module einen gemeinsamen Plusanschluss zur Verfügung zu stellen. Dadurch kann nicht auf dem oberen fixen Potential gemessen werden, da dadurch bei Steuergeräten für mehrere Farben kein gemeinsames Potential machbar wäre.

Ein weiteres Problem ist dabei, dass das Potential auf der potentialniedrigeren Seite der Leuchtdiodenstrecke bei konstanter Betriebsspannung natürlich von der Anzahl und der Art mehrerer in Serien geschalteter Leuchtdioden abhängt, da jede Leuchtdiode für einen definierten Spannungsabfall sorgt. Somit muss eine flexible Leuchtdiodenstromerfassung auf sehr unterschiedliche Potentiale ausgelegt sein, was die Stromerfassung noch komplexer macht.

Die vorliegende Erfindung zielt nunmehr auf eine Technik ab, bei der die Schalteransteuerung und genauer gesagt die Festlegung der Ausschaltzeitdauer von einem Ausschalten des Leistungsschalters bis zu einem folgenden Wiedereinschalten ohne Erfassung des Leuchtdiodenstroms erfolgen kann. Dabei soll natürlich weiterhin sichergestellt werden, dass der Diodenstrom und somit die Diodenleistung konstant gehalten wird.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung ist also eine Betriebsschaltung für wenigstens eine Leuchtdiode (oder mehrere in Serie geschaltete Leuchtdioden) vorgesehen, die einen Schaltregler aufweist. Dem Schaltregler wird eine Gleichspannung bzw. eine gleichgerichtete Wechselspannung zugeführt. Mittels einer Spule und einem durch eine Steuereinheit getakteten Schalter wird eine Versorgungsspannung oder Versorgungsstrom für die wenigstens eine Leuchtdiode bereitgestellt. Dieser Versorgungsstrom zeigt üblicherweise einen zickzackförmigen Verlauf um einen konstanten Mittelwert herum, wobei der zeitliche Mittelwert den Effektivstrom durch die Leuchtdiodenstrecke darstellt. Bei eingeschaltetem Schalter wird in der Spule eine Energie aufgebaut, die sich bei ausgeschaltetem Schalter über die wenigstens eine Leuchtdiode entlädt.

Gemäß der Erfindung kann die Steuereinheit die Zeitdauer zwischen einem Ausschalten und einem folgenden Wiedereinschalten des Schalters abhängig von der Leuchtdiodenspannung und eine zeitlich konstanten Kenngröße der Spule bestimmen.

Auch wenn zusätzlich noch der Lampenstrom in bekannter Weise erfasst werden kann, so ermöglicht es doch die vorliegende Technologie, grundsätzlich auch ohne die Leuchtdiodenstromerfassung auszukommen.

Die Leuchtdiodenspannung kann beispielsweise anhand der Differenz der Betriebsspannung und dem Potential der potentialniedrigen Seite der Leuchtdioden bei einem Buck-Konverter bzw. der potentialhöheren Seite der Leuchtdioden bei einem Boost-Konverter bestimmt werden.

Die Spulen-Kenngröße kann grundsätzlich anhand der elektrischen Parameter der Spule bestimmt werden. Alternativ kann die Steuereinheit die zeitlich konstante Spulen-Kenngröße auch über die Anstiegssteilheit des Spulenstroms , ggf. unter Berücksichtigung der Spulenspannung, beim erstmaligen Einschalten des Schalters erfassen. Bspw. kann dazu die Zeitdauer ermittelt werden, bis der beim ersten Einschaltvorgang von Null ansteigende Spulenstrom einen Referenzwert erreicht. Diese Erfassung hat den Vorteil, dass automatisch etwaige Toleranzen oder Fertigungsschwankungen kompensiert werden, da ja das tatsächliche und aktuelle elektromagnetische Verhalten der Spule erfasst wird.

Insbesondere kann es bei der vorliegenden Erfindung vorgesehen sein, dass die Steuereinheit den Leuchtdiodenstrom nicht erfasst.

Die Steuereinheit kann den Strom durch den Schalter über ein Messwiderstand erfassen.

Da wie gesagt, nicht unbedingt eine ggf. auf hohem Potential liegende Leuchtdiodenstromerfassung notwendig ist, kann die Steuereinheit als integrierte Schaltung wie beispielsweise ein ASIC ausgebildet sein.

Die Steuereinheit kann Schalter in Form von PWM-modulierten Signalen ansteuern.

Die Steuereinheit kann die Einschaltzeitdauer, d.h. die Zeitdauer zwischen einem Einschalten des Leistungsschalters und einem unmittelbar darauffolgendem Wiederausschalten, mittels Vergleich des Schalterstroms mit einem (beispielsweise internem) Referenzwert der Steuereinheit festlegen und dabei den Schalter wieder ausschalten, wenn der Strom durch den Schalter den Referenzwert erreicht bzw. überschreitet.

Dem erfassten Schalterstrom kann ein Zusatzwert beaufschlagt werden, der um so größer ist, je schneller der Anstieg des Schalterstroms nach einem Wiedereinschalten des Schalters ist.

Der Schaltregler kann ein Hochsetzsteller (Boost Converter) oder ein Tiefsetzsteller (Buck Converter) sein.

Die Erfindung schlägt auch Verfahren zum Betrieb einer Leuchtdiode mittels eines Schaltreglers vor.

Weitere Merkmale, Vorteile und Eigenschaften der vorliegenden Erfindung sollen nunmehr anhand der Figuren der begleitenden Zeichnungen und der detaillierten Beschreibung von Ausführungsbeispielen erläutert werden.
Fig. 1 zeigt ein erstes Ausführungsbeispiel einer erfindungsgemäßen Betriebsschaltung (Buck) für Leuchtdioden,
Fig. 2 zeigt schematisch die Ansteuersignale für den Steueranschluss (Gate bzw. Basis) des Halbleiter-Leistungsschalters S1,
Fig. 3 zeigt Signalverläufe, wie sie sich bei der Schaltung gemäß Fig. 1 einstellen,
Fig. 4 zeigt ein Schaltungsdetail zur Beaufschlagung des Schalterstrom-Erfassungwerts mit einem Zusatzwert, der von der Anstiegsgeschwindigkeit des Spulenstroms (oder der Spulenspannung) abhängt, und
Fig. 5 zeigt eine Abwandlung der Schaltung von Fig. 1. (Boost Version)

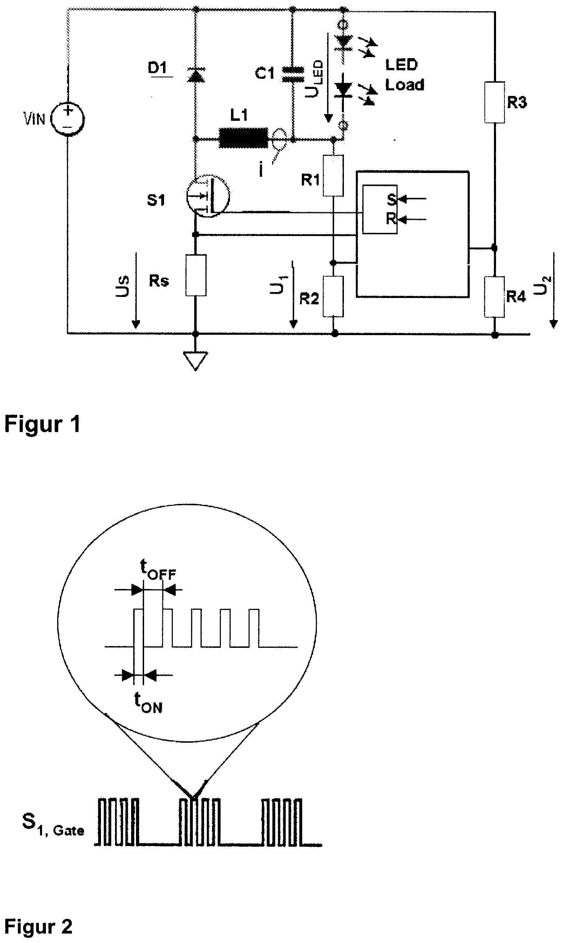

In Fig. 1 ist schematisch eine Schaltung zum geregelten Betrieb von Leuchtdioden (LED) gezeigt. Im dargestellten Beispiel sind zwei Leuchtdioden in Serie geschaltet, indessen ist es gerade ein Vorteil der vorliegenden Erfindung, dass sich die Betriebsschaltung sehr flexibel an die Art und die Anzahl der ebenfalls seriell verbundenen Leuchtdioden (LED) anpasst.

Der Betriebsschaltung wird eine Eingangs-Gleichspannung Vᵢₙ zugeführt, die natürlich auch eine gleichgerichtete Wechselspannung sein kann.

Eine Serienschaltung zwischen einem Halbleiter-Leistungsschalter S1 (beispielsweise einem MOSFET) und einer Freilaufdiode D1 energetisiert in eingeschaltetem Zustand des Schalters S1 eine Induktivität L1 mittels des durch den Schalter fliessenden Stroms. Im ausgeschalteten Zustand des Schalters S1 entlädt sich die in der Spule L1 gespeicherte Energie in Form eines Stroms i durch einen Kondensator C1 und die Leuchtdiodenstrecke LED.

Es ist eine Steuer- und/oder Regelschaltung SR vorgesehen, die als Stellgröße der Regelung der Leuchtdiodenleistung die Taktung des Schalters S1 beispielsweise in Form von PWM-modulierten Signalen vorgibt.

Mittels eines Messwiderstands RS erfasst die Steuer- und/oder Regelschaltung SR den Strom durch den Schalter S1 (im eingeschalteten Zustand des Schalters S1).

Über einen Spannungsteiler R1, R2 kann die Steuer- und/oder Regeleinheit SR das Potential auf der potentialniedrigeren Seite der LED-Strecke erfassen.

Ein weiterer Spannungsteiler R3, R4 ermöglicht die Erfassung der Versorgungsspannung.

Wie in Fig. 1 gezeigt, ist es bei der vorliegenden Erfindung nicht notwendig, den Strom durch die Leuchtdioden zu erfassen. Dagegen ist es durch die erfindungsgemäße Schaltung weiterhin möglich, den Mittelwert des Leuchtdiodenstroms wie auch bei Bedarf (P_{LED} = U_{LED} x I_{LED}, beide bekannt) die Leistung der Leuchtdioden im zeitlichen Mittelwert betrachtet konstant zu halten.

Fig. 2 zeigt die Ansteuersignale S_{1Gate}, die die Steuer- und/oder Regeleinheit SR in Form von PWM-modulierten Signalen an den Steueranschluss des Halbleiter-Leistungsschalters S1 abgibt.

Die Zeitdauer zwischen einem Einschalten und einem unmittelbar darauffolgendem Ausschalten des Schalters S1 wird im Folgenden mit tₒₙ bezeichnet. Dementsprechend wird die Zeitdauer zwischen einem Ausschalten und einem darauffolgenden Wiedereinschalten des Schalters mit T_{off} bezeichnet. Mit t1 wird die Zeitdauer des erstmaligen Einschaltens des Schalters S1 bezeichnet.

Die Einschaltzeitdauer tₒₙ wird erfindungsgemäß dadurch bestimmt, dass nach einem Einschalten des Schalters S1 der Schalterstrom anhand des Spannungssignals von dem Messwiderstand RS durch die Steuer- und/oder Regeleinheit SR überwacht wird. Das Ende der Einschaltzeitdauer tₒₙ ist dadurch festgelegt, dass der erfasste Schalterstrom einen internen Referenzwert U_{ref} der Steuer- und/oder Regeleinheit SR erreicht bzw. überschreitet.

Der Stromverlauf im eingeschalteten Zustand des Schalters S1 kann somit gut überwacht werden.

Dagegen ist eine direkte Erfassung des Stroms durch die Spule L1 im ausgeschalteten Zustand des Schalters S1 gemäß der vorliegenden Erfindung nicht notwendig.

Beim Stand der Technik wird wie gesagt, der Leuchtdiodenstrom in der Ausschaltzeitdauer des Schalters S1 erfasst und der Schalter S1 wiedereingeschaltet, wenn dieser Leuchtdiodenstrom einen unteren Grenzwert erreicht hat.

Bei der vorliegenden Erfindung wird nunmehr die Ausschaltzeitdauer t_{off} für den Schalter S1 abhängig von der Spannung U_{led} über die Leuchtdiodenstrecke und einem zeitlich sich nicht verändernden Kennwert k_{L} für die Induktivität (Drossel) L1 bestimmt.

Die Leuchtdiodenspannung U_{led} kann die Steuer- und/oder Regelschaltung SR anhand der Differenz zwischen der über den Spannungsteiler R3, R4 erfassten Betriebsspannung und der mittels des Spannungsteilers R1, R2 erfassten Spannung an der potentialniedrigeren Seite der Leuchtdiodenstrecke ermitteln.

Der zeitlich sich nicht verändernde Drosselkennwert k_{L} kann beispielsweise anhand der elektrischen Kennwerte der Induktivität L1 berechnet bzw. gemessen werden.

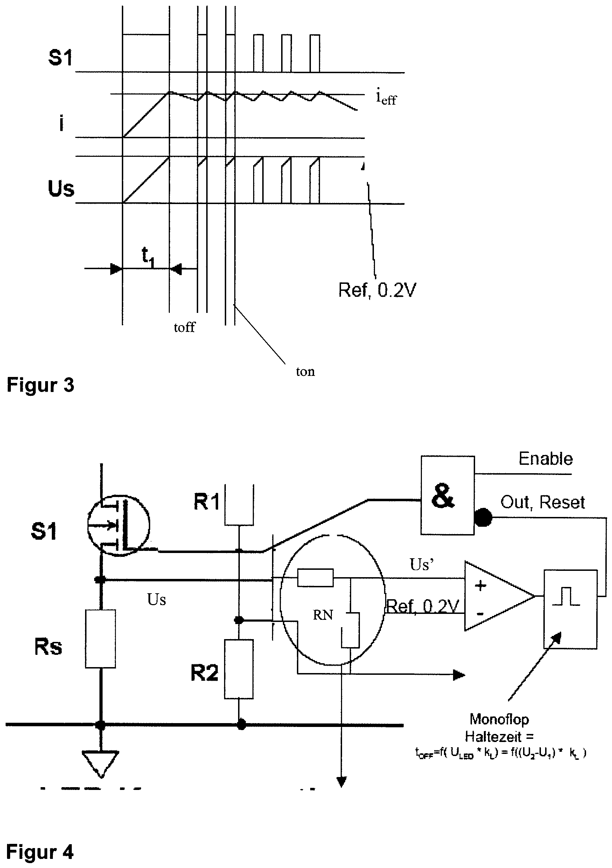

Besonders vorteilhaft ist es aber, wenn das elektromagnetische Verhalten der Spule L1 anhand des Ansteigens des Spulenstroms beim erstmaligen Einschalten des Schalters S1 ermittelt wird. Der Kennwert k_{L} ist somit eine Funktion der Zeitdauer t₁ und der Spulenspannung (während dem ON Zyklus messbar), d.h. der tₒₙ Zeit zwischen dem erstmaligen Einschalten und dem Zeitpunkt, zu dem der Schalterstrom (wiedergegeben durch Uₛ) von Null ansteigend den internen Referenzwert der Steuer- und/oder Regelschaltung SR erreicht. Dies ist in Fig. 3 schematisch dargestellt. In Fig. 3 ist das Gate-Ansteuersignal für den Schalter S1 in der obersten Grafik dargestellt. Bei dem erstmaligen Einschalten während der Zeitdauer t₁ steigt der Strom i durch die Spule L1 wie auch der Strom durch den Schalter, wiedergegeben durch das Spannungssignal U_{S} vom Messwiderstand R1.

Wenn die den Schalterstrom wiedergebende Spannung US den Referenzwert U_{ref} erreicht, wird der Schalter S1 wieder ausgeschaltet (Schaltersignal S1 auf "low"). In diesem Zustand sinkt der Spulenstrom i wieder ab, da sich die gespeicherte elektromagnetische Energie in der Spule L1 über der Leuchtdiodenstrecke entlädt. Nach Ablauf der wie oben definierten Ausschaltzeitdauer T_{off} wird dann die Steuer- und/oder Regeleinheit SR den Schalter wieder einschalten, und dies während eine Einschaltzeitdauer Tₒₙ die wiederum anhand des Stroms durch den Schalter S1 ermittelt wird. Somit ergibt sich der gezeigte Stromverlauf i, der im zeitlichen Mittel um einen konstanten Mittelwert i_{eff} herum zickzackförmig verläuft.

Um gezielt ein Dimmen der Leuchtdioden in der Art einer PWM-Modulation zu erreichen, kann die Ausschaltzeitdauer T_{off} im Sinne echter Pausen des Diodenstroms verlängert werden, wobei darauf geachtet wird, dass die Ausschaltzeiten für das menschliche Auge nicht detektierbar sind. Bei derartigen Pausen kommt es natürlich beim Erneuten Einschalten zu einer Aufmagnetisierung der Spule, was indessen durch die erfindungsgemässe Regelung auf den Drosselstrom kompensiert wird.

Ein besonderes Problem kann entstehen, wenn der Anstieg des Stroms durch die Spule L1 bei entsprechender kleiner Induktivität der Spule L1 sehr schnell bzgl. des Ausschaltverhaltens bei der Ansteuerung des Schalters S1 zu langsam verläuft. In diesem Fall wäre zu befürchten, dass aufgrund der zeitlichen Verzögerung im Ausschaltvorgang des Schalters S1 der Schalterstrom und damit die Shuntspannung ungewollt über den Referenzwert U_{ref} "hinausschießt" und somit eine Beschädigung des Schalters S1 erfolgen könnte. Zumindest wird der Mittelwertstrom durch die zu hohen Stromspitzen nicht mehr der erwünschten Genauigkeit entsprechen.

Wie gesagt, dieses Problem ist um so ausgeprägter, je schneller der Anstieg des Spulenstroms i nach einem Wiedereinschalten des Schalters S1 ist.

Erfindungsgemäß ist es daher vorgesehen, dass dem gemessenen Schalterstromwert ein Zusatzwert beaufschlagt wird, der desto größer ist, je steiler der Anstieg des Stromverlaufs durch die Spule ist, d.h. je kürzer die Zeitdauer t1 ist.

Fig. 4 zeigt nunmehr eine schaltungsgemäße Implementierung einer derartigen Beaufschlagung. Dabei ist ein Widerstandsnetzwerk R_{N} vorgesehen, das den gemessen Stromwert (wiedergegeben durch Uₛ) einen Zusatzwert beaufschlagt, der von dem Verbindungspunkt des Spannungsteilers R1, R2 abgegriffen wird, so dass der Wert der Beaufschlagung von der Höhe des Potentials an der potential niedrigeren Seite der Leuchtdiodenstrecke abhängt. Je höher dieses Potential auf der potential niedrigeren Seite der Leuchtdiodenstrecke gegenüber Masse ist, desto steiler ist natürlich auch der Anstieg des Spulenstroms im eingeschalteten Zustand des Schalters S1.

Wie in den Figuren dargestellt, wird der somit modifizierte Strommesswert Uₛ' einem Komparator in der Regel- und/oder Steuereinheit SR zugeführt, wobei dieser Komparator den modifizierten Strommesswert U_{S} mit einer internen Referenz von beispielsweise 0,2 V vergleicht. Das Ausgangssignal des Komparators steuert wiederum den Ausschaltzeitpunkt für den Schalter S1 an.

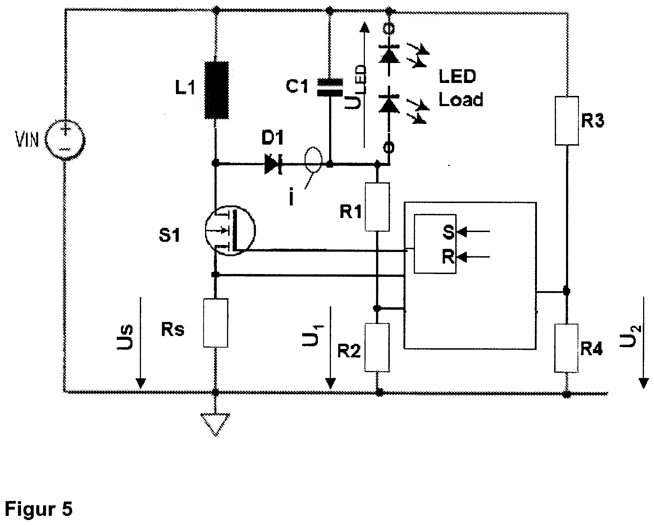

Fig. 5 zeigt eine Modifikation der Schaltung von Fig. 1 dahingehend, dass die Anordnung der Drossel L1, der Freilaufdiode D1 sowie der Orientierung der Leuchtdiodenstrecke modifiziert ist (Boost Topologie).

Insgesamt bleibt also festzuhalten, dass die Erfindung eine Technik bereitstellt, bei der ein zeitlicher Mittelwert des Stroms durch die Leuchtdioden und somit eine zeitliche Konstanz des Leuchtdiodenstromes oder der Leistung (bei Einbeziehung der Diodenspannung) auch ohne Erfassung des Leuchtdiodenstroms durchgeführt werden kann. Da die Regelung durch Bestimmung der Ausschaltzeitdauer T_{off} von dem Potential auf der potentialniedrigeren Seite der Leuchtdiodenstrecke abhängt, stellt sich das Regelverhalten automatisch auf eine Änderung der Anzahl und/oder Art der verwendeten Leuchtdioden bzw. eine zeitliche/thermische Veränderung der Leuchtdioden ein.

## Patentansprüche

1. Betriebsschaltung für wenigstens eine Leuchtdiode (LED),
- aufweisend eine Schaltreglerschaltung,
- der eine Gleichspannung (Vᵢₙ) zugeführt wird, und
- die dazu ausgelegt ist, mittels einer Spule (L1) und einen durch eine Steuereinheit (SR) getakteten Schalter (S1) eine Versorgungsspannung für die wenigstens eine Leuchtdiode (LED) bereitzustellen, wobei
- die Taktung des Schalters (S1) erfolgt, indem die Steuereinheit (SR) dazu ausgelegt ist, den Schalter (S1) abwechselnd für eine Einschaltzeitdauer (tₒₙ) zwischen einem jeweiligen Einschalten und einem unmittelbar darauffolgenden Wiederausschalten des Schalters (S1) einzuschalten und für eine Ausschaltzeitdauer (t_{off}) zwischen einem jeweiligen Wiederausschalten und einem darauffolgenden Wiedereinschalten des Schalters (S1) auszuschalten, und
- wobei bei eingeschaltetem Schalter (S1) in der Spule (L1) eine Energie aufgebaut wird, die sich bei ausgeschaltetem Schalter (S1) über die wenigstens eine Leuchtdiode (LED) entlädt,
**dadurch gekennzeichnet, dass**
- die Betriebsschaltung dazu ausgelegt ist, einer einen erfassten Schalterstrom wiedergebenden Spannung (Us) einen Zusatzwert zu beaufschlagen, wobei der Zusatzwert umso größer ist, je steiler ein Anstieg des Schalterstroms nach dem Wiedereinschalten des Schalters (S1) ist,
- wobei die Steuereinheit (SR) dazu ausgelegt ist,
- zur Erfassung der Einschaltzeitdauer (tₒₙ) des Schalters (S1) die mit dem Zusatzwert beaufschlagte Spannung (Uₛ) mit einem Referenzwert (U_{ref}) zu vergleichen, und
- den Schalter (S1) wieder auszuschalten, wenn die mit dem Zusatzwert beaufschlagte Spannung (Uₛ) den Referenzwert (U_{ref}) erreicht bzw. überschreitet.

2. Betriebsschaltung für wenigstens eine Leuchtdiode (LED) nach Anspruch 1, wobei die Steuereinheit (SR) dazu ausgelegt ist, die Ausschaltzeitdauer (t_{off}) abhängig von einer Spannung (U_{led}) über der wenigstens einen Leuchtdiode (LED) und einer zeitlich konstanten Kenngröße (k_{L}) der Spule (L1) zu bestimmen und den Schalter (S1) nach Ablauf der Ausschaltzeitdauer (t_{off}) wieder einzuschalten.

3. Betriebsschaltung gemäß Anspruch 1 oder 2, ferner aufweisend
- einen Spannungsteilers (R1, R2), der mit der potentialniedrigeren Seite einer die zumindest eine Leuchtdiode (LED) aufweisenden Leuchtdiodenstrecke verbindbar ist, und
- ein Widerstandsnetzwerk (R_{N}), das dazu ausgelegt ist, die den erfassten Schalterstrom wiedergebenden Spannung (U_{S}) mit dem Zusatzwert zu beaufschlagen, wobei der Zusatzwert von einem Verbindungspunkt des Spannungsteilers (R1, R2), abgegriffen wird, sodass der Zusatzwert von einer Höhe eines Potentials an der potentialniedrigeren Seite der die zumindest eine Leuchtdiode (LED) aufweisenden Leuchtdiodenstrecke abhängt.

4. Betriebsschaltung nach einem der vorhergehenden Ansprüche, aufweisend einen Messwiderstand (RS), wobei
die Steuereinheit (SR) dazu ausgelegt ist, den Strom durch den Schalter (S1) über den Messwiderstand (RS) zu erfassen.

5. Betriebsschaltung nach einem der vorhergehenden Ansprüche,
bei der die Steuereinheit (SR) eine integrierte Schaltung ist.

6. Betriebsschaltung nach einem der vorhergehenden Ansprüche,
bei der die Steuereinheit (SR) dazu ausgelegt ist, den Schalter (S1) in Form von PWM-modulierten Signalen anzusteuern.

7. Betriebsschaltung nach einem der vorhergehenden Ansprüche,
bei der die Schaltreglerschaltung ein Hochsetzsteller oder ein Tiefsetzsteller ist.

8. Verfahren zum Betrieb wenigstens einer Leuchtdiode (LED) mittels einer Schaltreglerschaltung,
- der eine Gleichspannung (Vᵢₙ) zugeführt wird, und
- die mittels einer Spule (L1) und einem durch eine Steuereinheit (SR) getakteten Schalter (S1) eine Versorgungsspannung für die wenigstens eine Leuchtdiode (LED) bereitstellt, wobei
- bei eingeschaltetem Schalter (S1) in der Spule (L1) eine Energie aufgebaut wird, die sich bei ausgeschaltetem Schalter (S1) über die wenigstens eine Leuchtdiode (LED) entlädt,
**dadurch gekennzeichnet, dass**
- einer einen erfassten Schalterstrom wiedergebenden Spannung (U_{S}) ein Zusatzwert beaufschlagt wird, wobei der Zusatzwert umso größer ist, je steiler ein Anstieg des Schalterstroms nach einem Wiedereinschalten des Schalters (S1) ist,
- die Steuereinheit (SR) zur Erfassung einer Einschaltzeitdauer (tₒₙ) zwischen dem jeweiligen Einschalten und einem unmittelbar darauffolgenden Wiederausschalten des Schalters (S1) die mit dem Zusatzwert beaufschlagte Spannung (U_{S}) mit einem Referenzwert (U_{ref}) vergleicht, und
- der Schalter (S1) wieder ausgeschaltet wird, wenn die mit dem Zusatzwert beaufschlagte Spannung (U_{S}) den Referenzwert (U_{ref}) erreicht bzw. überschreitet.

9. Verfahren nach Anspruch 8, wobei das elektromagnetische Verhalten der Spule (L1) anhand eines Ansteigens eines Spulenstroms (i) bei einem erstmaligen Einschalten des Schalters (S1) ermittelt wird.

10. Verfahren nach Anspruch 8 oder 9, wobei unter Einbeziehung einer LED-Spannung (U_{led}) eine Konstant-Leistungsregelung der zumindest einen LED erfolgt.

11. Verfahren nach einem der Ansprüche 8 bis 10,
bei dem die Steuereinheit (SR) den Strom durch den Schalter (S1) über einen Messwiderstand (RS) erfasst.

12. Verfahren nach einem der Ansprüche 8 bis 11,
bei dem die Steuereinheit (SR) den Schalter (S1) in Form von PWM-modulierten Signalen ansteuert.

## Claims

1. Operating circuit for at least one light-emitting diode (LED),
- comprising a switching regulator circuit,
- which is supplied with a direct current (Vᵢₙ), and
- which is designed to provide a supply voltage for the at least one light-emitting diode (LED) by means of a coil (L1) and a switch (S1) timed by a control unit (SR), wherein
- the switch (S1) is timed by the control unit (SR) being designed to alternately turn on the switch (S1) for a switch-on duration (tₒₙ) between a respective turning on and an immediately following turning off of the switch (S1) and for a switch-off duration (t_{off}) between a respective turning off and a following turning on of the switch (S1), and
- wherein energy is built up in the coil (L1) when the switch (S1) is turned on and discharged via the at least one light-emitting diode (LED) when the switch (S1) is turned off,
**characterized in that**
- the operating circuit is designed to add an additional value to a voltage representing a detected switch current (U_{S}), wherein the additional value is the larger, the steeper an increase of the switch current is after turning the switch (S1) on again,
- wherein the control unit (SR) is designed
- to compare the voltage (U_{S}) to which the additional value was added to a reference value (U_{ref}) in order to determine the switch-on duration (tₒₙ) of the switch (S1), and
- to turn off the switch (S1) again when the voltage (U_{S}) to which the additional value was added reaches or exceeds the reference value (Uret) (sic).

2. Operating circuit for at least one light-emitting diode (LED) according to claim 1, wherein the control unit (SR) is designed to determine the switch-off duration (t_{off}) as a function of a voltage (U_{led}) across the at least one light-emitting diode (LED), and a characteristic variable (k_{L}), constant over time, of the coil (L1) and to turn the switch (S1) on again after the switch-off duration (t_{off}) has lapsed.

3. Operating circuit according to claim 1 or 2, further comprising
- a voltage divider (R1, R2) which can be connected to the lower-potential side of a light-emitting diode line comprising the at least one light-emitting diode (LED), and
- a resistor network (RN) designed to add the additional value to the voltage (U_{S}) representing the detected switch current, wherein the additional value is tapped at a connecting point of the voltage divider (R1, R2) so that the additional value depends on the magnitude of a potential on the lower-potential side of the light-emitting diode line comprising the at least one light-emitting diode (LED).

4. Operating circuit according to any of the preceding claims, comprising a measuring resistor (RS), wherein
the control unit (SR) is designed to detect the current through the switch (S1) via the measuring resistor (RS).

5. Operating circuit according to any of the preceding claims, wherein the control unit (SR) is an integrated circuit.

6. Operating circuit according to any of the preceding claims, wherein the control unit (SR) is designed to control the switch (S1) in the form of PWM-modulated signals.

7. Operating circuit according to any of the preceding claims, wherein the switching regulator circuit is a boost converter or a buck converter.

8. Method for operating at least one light-emitting diode (LED) by means of a switching regulator circuit,
- which is supplied with a direct current (Vᵢₙ), and
- which provides a supply voltage for the at least one light-emitting diode (LED) by means of a coil (L1) and a switch (S1) timed by a control unit (SR), wherein
- energy is built up in the coil (L1) when the switch (S1) is turned on and discharged via the at least one light-emitting diode (LED) when the switch (S1) is turned off,
**characterized in that**
- an additional value is added to a voltage (U_{S}) representing a detected switch current, wherein the additional value is the larger, the steeper an increase of the switch current is after turning the switch (S1) on again,
- the control unit (SR) compares the voltage (U_{S}) to which the additional value was added to a reference value (U_{ref}) in order to determine a switch-on duration (tₒₙ) between the respective turning on and an immediately following turning off of the switch (S1), and
- the switch (S1) is turned off again when the voltage (U_{S}) to which the additional value was added reaches or exceeds the reference value (U_{ref}).

9. Method according to claim 8, wherein the electromagnetic behavior of the coil (L1) is determined based on an increase of a coil current (i) when the switch (S1) is turned on for the first time.

10. Method according to claim 8 or 9, wherein a constant power regulation of the at least one LED takes place using an LED voltage (U_{led}).

11. Method according to any of claims 8 to 10,
wherein the control unit (SR) detects the current through the switch (S1) via a measuring resistor (RS).

12. Method according to any of claims 8 to 11,
wherein the control unit (SR) controls the switch (S1) in the form of PWM-modulated signals.

## Revendications

1. Circuit pour au moins une diode électroluminescente (LED),
- présentant un circuit de régulation de commutation,
- qui est alimenté en tension continue (Vᵢₙ), et
- est prévu pour fournir, au moyen d'une bobine (L1) et d'un commutateur (S1) synchronisé par une unité de commande (SR) une tension d'alimentation pour au moins une diode électroluminescente, où
- la synchronisation du commutateur (S1) a lieu en ce que l'unité de commande (SR) est prévue pour enclencher alternativement le commutateur (S1) pour une durée d'activation (tₒₙ) entre une activation respective et une désactivation ultérieure immédiate du commutateur (S1) et pour le couper pour une durée de désactivation (t_{off}) entre la désactivation respective et une nouvelle activation du commutateur (S1) ultérieur, et
- où, lorsque le commutateur (S1) est activé, une énergie est établie dans la bobine (L1) qui se décharge par le biais de l'au moins une diode électroluminescente (LED) lorsque le commutateur (S1) est désactivé,
**caractérisé en ce**
- **que** le circuit est prévu pour appliquer un incrément à une tension (U_{S}) reflétant un courant de commutateur détecté, l'incrément étant d'autant plus grand pour une croissance du courant de commutateur plus rapide après la réactivation du commutateur (S1),
- où l'unité de commande (SR) est conçue pour
- la détection de la durée d'activation (tₒₙ) du commutateur (S1), la comparaison de la tension (U_{S}) à laquelle l'incrément a été appliqué avec une valeur de référence (U_{ref}), et
- la désactivation de nouveau du commutateur (S1) lorsque la tension (U_{S}) à laquelle l'incrément a été appliqué atteint, respectivement, dépasse la valeur de référence (Uref).

2. Circuit pour au moins une diode électroluminescente (LED) selon la revendication 1, dans lequel l'unité de commande (SR) est prévue pour déterminer la durée de désactivation (t_{off}) en fonction d'une tension (U_{led}) par le biais de l'au moins une diode électroluminescente (LED) et une caractéristique (k_{L}) de la bobine (L1) constante dans le temps et pour activer de nouveau le commutateur (S1) après l'écoulement de la durée de désactivation (t_{off}).

3. Circuit selon la revendication 1 ou la revendication 2, présentant en outre
- un diviseur de tension (R1, R2) qui peut être connecté avec le côté de potentiel le plus faible d'un trajet de diodes électroluminescentes présentant l'au moins une diode électroluminescente (LED), et
- un réseau à résistance (RN), qui est prévu pour appliquer l'incrément à la tension (U_{S}) reflétant le courant de commutateur détecté, où l'incrément est déduit à partir d'un point de connexion du diviseur de tension (R1, R2), de sorte que l'incrément dépend d'une grandeur d'un potentiel au niveau du côté de potentiel le plus faible du trajet de diodes électroluminescentes présentant l'au moins une diode électroluminescente (LED).

4. Circuit selon l'une des revendications précédentes, présentant une résistance de mesure (RS), où l'unité de commande (SR) est prévue pour détecter le courant traversant le commutateur (S1) par le biais de la résistance de mesure (RS).

5. Circuit selon l'une des revendications précédentes, chez lequel l'unité de commande (SR) est un circuit intégré.

6. Circuit selon l'une des revendications précédentes, chez lequel l'unité de commande (SR) est prévue pour activer le commutateur (S1) sous forme de signaux modulés PWM.

7. Circuit selon l'une des revendications précédentes, chez lequel le circuit de régulation de commutation est un transformateur élévateur de tension ou un transformateur réducteur de tension.

8. Procédé d'activation d'au moins une diode électroluminescente (LED) au moyen d'un circuit de régulation de commutation,
- qui est alimenté en tension continue (Vᵢₙ), et
- qui fournit une tension d'alimentation pour l'au moins une diode électroluminescente (LED) au moyen d'une bobine (L1) et d'un commutateur (S1) synchronisé par une unité de commande (SR), où,
- dans le cas d'un commutateur (S1) activé, une énergie est générée dans la bobine (L1) qui se décharge dans le cas d'un commutateur (S1) désactivé par le biais de l'au moins une diode électroluminescente (LED),
**caractérisé en ce**
- **qu'**un incrément est appliqué à une tension (U_{S}) reflétant le courant de commutateur détecté, l'incrément étant d'autant plus grand pour une croissance du courant de commutateur plus importante après la nouvelle activation du commutateur (S1),
- l'unité de commande (SR), pour la détection d'une durée d'activation (tₒₙ) entre l'activation respective et une désactivation suivante immédiate du commutateur (S 1) compare la tension (U_{S}) à laquelle est appliquée l'incrément avec une valeur de référence (U_{ref}), et
- le commutateur (S1) est de nouveau désactivé lorsque la tension (U_{S}) à laquelle est appliqué l'incrément atteint, respectivement, dépasse la valeur de référence (U_{ref}).

9. Procédé selon la revendication 8, dans lequel le comportement électromagnétique de la bobine (L1) est déterminé à l'aide d'une augmentation d'un courant de bobine (i) lors d'une première activation du commutateur (S1) .

10. Procédé selon la revendication 8 ou la revendication 9, dans lequel il y a une régulation de puissance constante de l'au moins une LED moyennant la prise en compte d'une tension de LED (U_{led}).

11. Procédé selon l'une des revendications 8 à 10,
chez lequel l'unité de commande (SR) détecte le courant traversant le commutateur (S1) par le biais d'une résistance de mesure (RS).

12. Procédé selon l'une des revendications 8 à 11,
chez lequel l'unité de commande (SR) active le commutateur (S1) sous forme de signaux modulés PWM.
